# EUROPÄISCHE PATENTSCHRIFT

(11) **EP 2 597 228 B1**
(45) Veröffentlichungstag und Bekanntmachung des Hinweises auf die Patenterteilung: **20.02.2019**
(21) Anmeldenummer: 12193925.0
(22) Anmeldetag: 22.11.2012
(51) Int. Cl.: E04H 15/36, E04H 15/44, E04H 15/42, E04H 15/32, F16B 7/04

(54) **GESTÄNGESYSTEM ZUR ABSTÜTZUNG EINER ZUSAMMENLEGBAREN OUTDOOR-KONSTRUKTION UND OUTDOOR-KONSTRUKTION**
ROD SYSTEM FOR SUPPORTING A COLLAPSIBLE OUTDOOR CONSTRUCTION AND OUTDOOR CONSTRUCTION
SYSTÈME DE TIGES POUR SUPPORTER UNE CONSTRUCTION D'EXTÉRIEUR REPLIABLE ET CONSTRUCTION D'EXTÉRIEUR

(30) Priorität: 22.11.2011 DE 102011086880
(43) Veröffentlichungstag der Anmeldung: 29.05.2013
(73) Patentinhaber: Oberalp Deutschland GmbH, 85609 Aschheim (DE)
(72) Erfinder: Carradinha, Pedro, 85609 Aschheim (DE)
(74) Vertreter: Weickmann & Weickmann PartmbB

(56) Entgegenhaltungen:
- WO-A2-2008/011375
- DE-U1-202006 007 892
- GB-A- 2 319 724

## Beschreibung

Die vorliegende Erfindung betrifft ein Gestängesystem zur Abstützung einer zusammenlegbaren Outdoor-Konstruktion, insbesondere ein Zeltgestängesystem zur Abstützung eines Zelts, sowie eine derartige Outdoor-Konstruktion.

Zusammenlegbare Outdoor-Konstruktionen gemäß der vorliegenden Offenbarung sind insbesondere Zelte, gleichfalls jedoch Überdachungen oder Abschirmungen verschiedenster Art (Sonnensegel, Windsegel, Pavillons, Strandmuscheln, Tragegerüste zur Abstützung von Outdoor-Ausrüstung usw.). Zentrales Merkmal solcher Outdoor-Konstruktionen ist die Verstellbarkeit zwischen einem zusammengelegten Zustand, in welchem die Outdoor-Konstruktion verringertes Packmaß bzw. verringerte Sperrigkeit aufweist, die einen Transport der Outdoor-Konstruktion erlaubt, und einem aufgebauten Zustand, in welchem die Outdoor-Konstruktion ihren eigentlichen Zweck als Teil der Ausrüstung erfüllt. Im aufgebauten Zustand ist die Outdoor-Konstruktion zumeist vergrößert und am jeweils genutzten Ort stationär eingerichtet.

Die Verstellung der Outdoor-Konstruktion zwischen dem zusammengelegten Zustand und dem aufgebauten Zustand wird zum großen Teil durch die entsprechende Verstellung des Gestängesystems bestimmt, welche die Outdoor-Konstruktion im aufgebauten Zustand abstützt. Um das Aufbauen und Zusammenlegen der Outdoor-Konstruktion zu vereinfachen bzw. zu beschleunigen ist es daher ein grundsätzliches Ziel, ein Gestängesystem bereitzustellen, welches sich schnell und einfach aufbauen oder zusammenlegen lässt. Mit steigendem Schwierigkeitsgrad der Tour oder Expedition, z.B. im alpinen oder hochalpinen Bereich, steigen auch die
Anforderungen an die Ausrüstung. So ist beispielsweise ein im hochalpinen Bereich genutztes Zelt vorzugsweise einerseits von sehr geringem Gewicht und andererseits von hoher Stabilität, um auch für widrige Wetterbedingungen ausgerüstet zu sein. Zudem ist es gerade im Hochtourenbereich im Falle schnell eintretender Wetteränderungen erforderlich, eine stabile Outdoor-Konstruktion, insbesondere Zelt, in kurzer Zeit aufzubauen.

Die GB 2 319 724 A sowie die DE 20 2006 007 892 U1 offenbaren Gestängesysteme gemäß dem Oberbegriff des Anspruchs 1 der Erfindung.

Im Stand der Technik sind Gestängesysteme für Zelte bekannt, welche eine Mehrzahl von jeweils endseitig aneinander fügbaren Stangensegmenten aufweisen, durch die ein Gummiband gefädelt ist. Das Gummiband hält die Stangensegmente im zusammengelegten Zustand verliersicher zusammen, so dass sie relativ schnell aneinander gefügt werden können. Ein derartiges Gestängesystem hat zunächst den Nachteil, dass die Spannkraft des Gummibandes zwar ein Zusammenstecken der Stangensegmente erleichtert, die zugewandten Enden benachbarter Stangensegmente jedoch zumeist dennoch aneinander hängen bleiben, bevor sie ineinander gleiten. So ist beim Aufbau des Gestängesystems oft an jedem Paar von Stangensegmenten der Einfädelvorgang manuell zu unterstützen oder das Gestängesystem ist mit einigem Geschick so lange hin und her zu bewegen, bis alle Stangensegmente mit ihrem jeweiligen Nachbar in Eingriff getreten sind.

Ein zweiter Nachteil des bekannten Zeltgestängesystems liegt darin, dass ein Zusammenfügen der Stangensegmente und insbesondere auch ein Lösen der Stangensegmente nur dann möglich ist, wenn das Gestängesystem im Wesentlichen freigelegt ist, sich insbesondere nicht in einem Schlauchabschnitt des Zelts befindet. Beim Aufbau des Zelts sind demnach erst die Stangensegmente aneinander zu fügen und anschließend ist die so gebildete Stange in den Schlauchabschnitt des Zelts einzuführen. Beim Abbau des Zelts muss die Stange aus dem Schlauchabschnitt herausgezogen werden und anschließend müssen alle Stangensegmente jeweils paarweise auseinander gezogen werden, bis das Gestängesystem vollständig zusammengelegt ist.

Aufgabe der vorliegenden Erfindung ist es, ein Gestängesystem sowie eine Outdoor-Konstruktion der eingangs beschriebenen Art bereitzustellen, welche mit verringertem Zeitaufwand zwischen dem aufgebauten Zustand und dem zusammengelegtem Zustand verstellbar sind und gleichzeitig hohe Stabilität und geringes Gewicht aufweisen. Insbesondere sollen die oben im Zusammenhang mit dem Stand der Technik beschriebenen Nachteile bekannter Gestängesysteme überwunden werden.

Nach einem ersten Aspekt wird die Erfindungsaufgabe gelöst durch ein Gestängesystem gemäß Anspruch 1.

Nach einem wichtigen Merkmal der Erfindung des ersten Aspekts sind somit einander benachbarte Stangensegmente sowohl im aufgebauten Zustand als auch im zusammengelegten Zustand des Gestängesystems durch ein flexibles Kopplungsmittel miteinander verbunden, wobei das Kopplungsmittel insbesondere beim Auseinanderziehen der Stangensegmente bei Erreichen eines Maximalabstands die weitere Trennungsbewegung verhindert, d. h. Zugkraft zwischen den benachbarten Stangensegmenten überträgt. Auf diese Weise wird bei einer axialen Zugbewegung des ersten Stangensegments einer Reihe von Stangensegmenten diese Zugbewegung spätestens dann, wenn ein Abstand zwischen dem ersten Stangensegment und einem benachbarten zweiten Stangensegment den vorbestimmten Maximalabstand erreicht, auf das zweite Stangensegment übertragen. Damit wird auch das zweite Stangensegment in Richtung einer axialen Trennungsbewegung von einem in der Reihe folgenden dritten Stangensegment weg bewegt. Ist auch zwischen dem zweiten und dem dritten Stangensegment ein Kopplungsmittel gemäß der vorliegenden Erfindung vorgesehen, so kann die Zugkraft dann auch weiter auf das dritte Stangensegment übertragen werden, um dieses beispielsweise von einem in der Reihe folgenden, vierten Stangensegment zu trennen. Auf diese Weise ermöglicht das erfindungsgemäße Kopplungsmittel durch Ausübung einer Zugbewegung auf ein einziges Stangensegment eine Trennung mehrerer, insbesondere aller Stangensegmente einer Reihe von Stangensegmenten. Die Reihe von Stangensegmenten kann somit durch eine einzige Zugbetätigung auf einem ersten der Stangensegmente von dem zusammengebauten Zustand in den gelösten Zustand gebracht werden. Aufgrund der Flexibilität der Kopplungsmittel in Richtung einer Abwinkelung benachbarter Stangensegmente kann anschließend ein Zusammenlegen der Reihe von Stangensegmenten erfolgen. Somit erlaubt die Erfindung ein einfaches und schnelles Verstellen des Gestängesystems vom aufgebauten Zustand in den zusammengelegten Zustand.

Das Gestängesystem weist ein durchgehendes, flexibles Sicherungsmittel auf, welches durch die Stangensegmente hindurchgeführt ist, so dass die Stangensegmente an dem Sicherungsmittel in einer Reihe aufgefädelt sind. Durch ein solches Sicherungsmittel wird eine Verstellung des Gestängesystems vom zusammengelegten in den aufgebauten Zustand erleichtert. Beispielsweise kann das Sicherungsmittel in Längsrichtung elastisch ausgeführt sein und die Stangensegmente in axialer Richtung zueinander hin vorspannen, so dass ein Aneinanderfügen der Stangensegmente erleichtert wird. Alternativ oder zusätzlich kann das Sicherungsmittel einen Betätigungsabschnitt aufweisen, an welchem eine Zugbetätigung auf das Sicherungsmittel ausgeübt werden kann. Somit kann durch manuelle Zugbetätigung des Sicherungsmittels durch den Benutzer eine Kraft auf die Stangensegmente ausgeübt werden, die die Stangensegmente in axialer Richtung aufeinander zu bewegt, um das Gestängesystem in den aufgebauten Zustand zu bringen. In der zuletzt genannten Variante kann das Sicherungsmittel elastisch sein (z. B. ein Elastomerband/ -seil), jedoch eine entsprechend große Federkraft aufweisen, um ein Aneinanderfügen der Stangensegmente durch manuelle Zugbetätigung zu ermöglichen.

In einer im Folgenden detaillierter beschriebenen Ausführungsform kann das vorstehend erwähnte flexible Sicherungsmittel im Wesentlichen zugunelastisch sein. Unter Berücksichtigung der Tatsache, dass jedes Material, insbesondere jedes Seil, Band oder dergleichen, eine gewisse Eigenelastizität aufweist, wird in der vorliegenden Offenbarung unter einem im Wesentlichen zugunelastischen Sicherungsmittel ein Sicherungsmittel verstanden, welches abgegrenzt ist gegenüber Körpern aus gummielastischen oder elastomeren Materialien, wie etwa Gummibändern oder Gummiseilen oder dergleichen, die eine deutliche Längenänderung (z.B. größer als ungefähr 10 %) bei normaler manueller Zugbetätigung zeigen. Insbesondere liegt die durch Zugkraft bewirkbare Längenänderung des erfindungsgemäßen Sicherungsmittels deutlich unterhalb von Wegstrecken, die für eine Verstellung des Gestängesystems zwischen zusammengelegtem Zustand und aufgebautem Zustand relevant wären, z.B. unterhalb von ungefähr 10 % bei manueller Zugbetätigung.

Während somit beispielsweise bei einem aus dem oben beschriebenen Stand der Technik bekannten Zeltgestängesystem die Stangensegmente unter elastischer Entspannung des Sicherungsmittels ineinander geschoben und dabei aneinander gefügt werden, erfolgt in dieser Ausführungsform das Aneinanderfügen der Stangensegmente durch Aufbringung einer Zugkraft auf den Betätigungsabschnitt des zugunelastischen Sicherungsmittels von außen. Die zugfeste Ausgestaltung des Sicherungsmittels sowie die Bereitstellung des Betätigungsabschnitts erlauben dabei eine schnelle und kräftige Zugbetätigung des Sicherungsmittels, wobei die auf das Sicherungsmittel übertragbare Zugkraft insbesondere deutlich höher sein kann als die von einem im Stand der Technik verwendeten Gummiband erzeugte elastische Rückstellkraft. Der Nutzer kann somit in einer gewünschten Intensität die Zugbetätigung auf das Sicherungsmittel ausüben und somit gegebenenfalls das Sicherungsmittel schnell und kräftig ziehen, bis die Stangensegmente aneinander gefügt sind. Umgekehrt muss zum Lösen der Stangensegmente lediglich das Sicherungsmittel gelöst und locker gelassen werden und zum Lösen der Stangensegmente voneinander muss insbesondere nicht die elastische Rückstellkraft eines elastischen Gummibands überwunden werden.

Vorzugsweise ist das Sicherungsmittel an einem vordersten Stangensegment der Reihe von Stangensegmenten fixiert oder fixierbar und weist an oder nach einem letzten Stangensegment der Reihe von Stangensegmenten den Betätigungsabschnitt auf, an welchem eine Zugbetätigung auf das Sicherungsmittel ausgeübt werden kann, bis die Stangensegmente jeweils endseitig aneinander gefügt sind. In dieser Ausführungsform sind somit alle Stangensegmente der Reihe von Stangensegmenten zwischen einem fixierten Punkt des Sicherungsmittels und dem Betätigungsabschnitt aufgefädelt, so dass mit einer einzigen Zugbetätigung am Betätigungsabschnitt alle Stangensegmente der Reihe von Stangensegmenten aneinander gefügt werden können. Damit wird der Aufbau des Gestängesystems im besonderen Maße vereinfacht und beschleunigt.

Ein erfindungsgemäßes Gestängesystem kann mit Vorteil eine Fixiereinrichtung aufweisen, mit welcher der Betätigungsabschnitt in Bezug auf das Gestängesystem fixierbar ist. Die Fixiereinrichtung erlaubt insbesondere die Sicherung des Gestängesystems im aufgebauten Zustand, in dem die an dem Sicherungsmittel aufgefädelten Stangensegmente durch das im Wesentlichen zugunelastische Sicherungsmittel zusammengehalten werden, so dass insbesondere eine axiale Trennungsbewegung der Stangensegmente voneinander blockiert ist. Eine solche Fixiereinrichtung kann auch für die lösbare Fixierung des Sicherungsmittels am vordersten Stangensegment in der zuvor erwähnten Art verwendet werden. Insbesondere kann das Sicherungsmittel somit an beiden Enden einer Reihe von Stangensegmenten (d.h. am vordersten und am letzten Stangensegment) durch jeweils eine Fixiereinrichtung fixierbar und lösbar sein.

Eine Fixiereinrichtung der oben genannten Art kann in einer einfachen Variante einen Klemmspalt aufweisen, der dafür eingerichtet ist, das Sicherungsmittel im Klemmeingriff zu halten. Eine solche reibschlüssig arbeitende Fixiereinrichtung ist schnell und einfach zu bedienen und mit geringem Gewicht herzustellen.

Nachfolgend wird das erfindungsgemäße Kopplungsmittel näher erläutert. Dieses Kopplungsmittel ist ein Element, das verschieden ist von einem eine Mehrzahl von Stangensegmenten durchlaufenden Sicherungsmittel, insbesondere verschieden von dem vorstehend beschriebenen Sicherungsmittel. Es kann vorzugsweise an den einander zugewandten Endabschnitten benachbarter Stangensegmente ankoppeln und zumindest an einem der beiden Stangensegmente am Endabschnitt des Stangensegments befestigt sein, insbesondere an einer Außenwand oder einer Stirnwand befestigt sein. Vorzugsweise ist das Kopplungsmittel röhrenförmig ausgebildet, um ein axiales Ineinandergleiten benachbarter Stangensegmente zu unterstützen. Wird ein Sicherungsmittel der oben genannten Art vorgesehen, so kann das Sicherungsmittel das Kopplungsmittel axial durchsetzen, so dass das Sicherungsmittel am Kopplungsmittel verschiebbar gehalten ist.

Das Kopplungsmittel ist mit einem ersten der beiden benachbarten Stangensegmente fest verbunden und mit einem zweiten der beiden Stangensegmente axial verschiebbar gekoppelt. Die verschiebbare Kopplung mit dem zweiten Stangensegment erlaubt in einfacher und zuverlässiger Weise eine axiale Trennungsbewegung der beiden Stangenelemente zum Lösen sowie eine axiale Annäherungsbewegung der beiden Stangensegmente beim Anfügen. Vorzugsweise ist auch dieses Kopplungsmittel mit axial verschiebbarer Kopplung am zweiten Stangensegment in der oben beschriebenen Weise dazu eingerichtet, eine axiale Trennungsbewegung der beiden Stangensegmente auf einen vorbestimmten Maximalabstand der beiden Stangensegmente zu begrenzen, wobei dann in einer besonders vorteilhaften Variante ein vorderer Führungsabschnitt des Kopplungsmittels auch dann noch in dem zweiten Stangensegment eingeführt bleibt, wenn die beiden Stangensegmente in dem vorbestimmten Maximalabstand voneinander angeordnet sind. Das führt dazu, dass sowohl im aufgebauten als auch im zusammengelegten Zustand des Gestängesystems stets zumindest der vordere Führungsabschnitt des Kopplungsmittels in dem benachbarten Stangensegment eingeführt bleibt, d.h. das Kopplungsmittel nie vollständig aus dem benachbarten Stangensegment herausgezogen wird. Damit ist gewährleistet, dass beim Aufbauen des Gestängesystems die entsprechend ausgebildeten, benachbarten Stangensegmente stets zuverlässig ineinander einfädeln, so dass das Aufbauen des Gestängesystems vereinfacht und beschleunigt werden kann.

In einer weiteren bevorzugten Ausführungsform der Erfindung ist vorgesehen, dass ein erstes der Stangensegmente in axialer Richtung konzentrisch in eine axiale Öffnung eines benachbarten zweiten der Stangensegmente einsteckbar ist, wobei die Öffnung aufweist: einen proximalen Halteabschnitt, dessen Innendurchmesser an den Außendurchmesser des ersten Stangensegments angepasst ist, um das erste Stangensegment in einem aufgebauten Zustand des Gestängesystems passend aufzunehmen und zu halten, und einen distalen Führungstrichter, dessen Innendurchmesser größer ist, als der Innendurchmesser des Halteabschnitts, so dass in dem aufgebauten Zustand des Gestängesystems zwischen dem Führungstrichter und dem ersten Stangensegment ein Ringspalt verbleibt. Der auf diese Weise erzeugte Ringspalt zwischen Führungstrichter und darin einzuführendem Stangensegment erzielt den technischen Effekt, dass umgebende Elemente der Outdoor-Konstruktion insbesondere Teile eines Zeltstoffs, z.B. die Wandung eines Zeltstoff-Schlauchabschnitts, in welchen die Stangensegmente eingeführt sind, im Abstand von dem Halteabschnitt der Öffnung des zweiten Stangensegments gehalten werden, so dass diese Elemente beim Einführen des ersten Stangensegments in den Halteabschnitt des zweiten Stangensegments an dieser Stelle nicht eingeklemmt werden und das Aneinanderfügen der Stangensegmente nicht behindern können. Dieser Effekt kommt besonders dann zum Tragen, wenn die Reihe von Stangensegmenten in einen Schlauchabschnitt eines Zelts eingeführt sind, so dass sich Zeltstoff stets in unmittelbarer Umgebung der Stangensegmente befindet. Die Stangensegmente können dann in der erfindungsgemäßen Weise durch Betätigung des Sicherungsmittels aneinander gefügt werden, wobei der um den Ringspalt vergrößert ausgelegte Führungstrichter den Zeltstoff stets im ausreichenden Abstand von dem Halteabschnitt der Öffnung hält. Bei der Einführung des ersten Stangensegments in die Öffnung des zweiten Stangensegments kann dann Zeltstoff allenfalls ein kleines Stück weit in den Ringspalt zwischen Führungstrichter und erstem Stangensegment hereingezogen werden, erreicht jedoch nicht den Halteabschnitt, so dass ein Einführen des ersten Stangensegments in den Halteabschnitt nicht blockiert wird.

Vorzugsweise ist der Führungstrichter aus einem flexiblen Material gebildet, so dass die durch die Führungstrichter an dem Gestänge gebildeten Verdickungen nachgiebig sind und somit eine Handhabung des Gestänges sowie ein Zusammenlegen des Gestänges auf ein gewünschtes Packmaß nicht wesentlich beeinträchtigen. Flexible Führungstrichter können dann an einem Endabschnitt des zweiten Stangensegments befestigt sein, so dass die Stangensegmente und die Führungstrichter ihren Funktionen entsprechend aus unterschiedlichen, geeigneten Materialien gebildet sein können.

Nach einem zweiten Aspekt der Erfindung wird die oben genannte Aufgabe gelöst durch eine zusammenlegbare Outdoor-Konstruktion, insbesondere ein Zelt, umfassend ein Gestängesystem nach dem ersten Aspekt der Erfindung zur Abstützung der Outdoor-Konstruktion in einem aufgebauten Zustand. Angesichts der vorstehend im Zusammenhang mit dem Gestängesystem des ersten Aspekts der Erfindung beschriebenen Vorteile und Effekte kann eine solche Outdoor-Konstruktion des zweiten Aspekts der Erfindung schnell und mit einfachen Handgriffen aufgebaut werden. Insbesondere sind Ausführungsformen der Erfindung, wie oben dargelegt, dafür eingerichtet, mit einem einzigen Handgriff eine Mehrzahl von in einer Reihe angeordneten Stangensegmenten zusammenzufügen oder/und eine Mehrzahl von Stangensegmenten voneinander zu lösen, so dass eine paarweise manuelle Aneinanderfügung oder Trennung der Stangensegmente entfallen kann.

In einer besonders bevorzugten Ausführungsform der Erfindung des zweiten Aspekts ist vorgesehen, dass die Outdoor-Konstruktion mindestens einen Schlauchabschnitt aufweist, in welchen die Stangensegmente im aufgebauten Zustand sowie vorzugsweise auch im zusammengelegten Zustand der Outdoor-Konstruktion eingeführt sind.

Zum Aufbauen der Outdoor-Konstruktion kann das Gestängesystem in den aufgebauten Zustand gebracht werden, in dem die Stangensegmente (welche zuvor in den Schlauchabschnitt nacheinander eingeschoben wurden oder welche bereits im zusammengelegten Zustand der Outdoor-Konstruktion im Schlauchabschnitt verblieben) weiter in den Schlauchabschnitt hineingeschoben werden. Ein dem Nutzer abgewandtes, letztes Stangensegment der Reihe von Stangensegmenten stößt dann an ein geschlossenes Ende des Schlauchabschnitts oder an einen geeigneten Stopper, so dass es sich nicht weiter vom Nutzer wegbewegen kann. Durch weiteres Einschieben des dem Nutzer zugewandten, ersten Stangensegments in den Schlauchabschnitt und ggf. gleichzeitiges Ziehen am dem Nutzer zugewandten Ende des Schlauchabschnitts werden dann alle Stangensegmente paarweise zusammengeschoben und somit in den aufgebauten Zustand gebracht. Auf diese Weise kann das Gestängesystem auch ohne die Verwendung eines zusätzlichen Sicherungsmittels, welches durch alle Stangensegmente hindurchgeführt ist, mit einfachen Handgriffen aufgebaut werden, obwohl die Stangensegmente im Wesentlichen alle im Schlauchabschnitt angeordnet sind und somit von außen schwer zugänglich sind.

Wird ein Sicherungsmittel vorgesehen, so kann ein Betätigungsabschnitt des Sicherungsmittels, an welchem eine Zugbetätigung auf das Sicherungsmittel ausgeübt werden kann, an einer Öffnung des Schlauchabschnitts von außen zugänglich sein. Durch Zugbetätigung des Betätigungsabschnitts kann der Nutzer dann eine Reihe von Stangensegmenten gleichzeitig aneinanderfügen, obwohl diese an sich von außen unzugänglich in dem Schlauchabschnitt untergebracht sind. Ein separater Arbeitsschritt des Einführens des aufgebauten Gestängesystems in den Schlauchabschnitt kann somit entfallen.

In einer weiteren bevorzugten Ausführungsform, die insbesondere auch in Kombination mit der zuvor genannten Ausführungsform von Vorteil ist, kann ein vorderstes Stangensegment der Reihe von Stangensegmenten an der Outdoor-Konstruktion fixiert oder fixierbar sein oder einen Verankerungsabschnitt zur Verankerung des Stangensegments am Erdboden oder an einer übergeordneten Konstruktion aufweisen. Die Fixierung bzw. Verankerung des vordersten Stangensegments ermöglicht, durch Bewegung eines anderen Stangensegments eine Relativbewegung zwischen zumindest diesen beiden Stangensegmenten, insbesondere zum Lösen der Stangensegmente. So kann etwa bei Bereitstellung des oben beschriebenen Kopplungsmittels, welches einen Maximalabstand zwischen benachbarten Stangensegmenten im gelösten Zustand begrenzt, eine Zugbetätigung eines letzten Stangensegments einer Reihe von Stangensegmenten ein paarweises Lösen aller Stangensegmente einer Reihe von Stangensegmenten bewirken.

Die Erfindung wird nachfolgend anhand bevorzugter Ausführungsbeispiele unter Bezugnahme auf die beigefügten Zeichnungen näher erläutert. Es zeigen:
- Figur 1:: ein Zelt gemäß einem Ausführungsbeispiel der vorliegenden Erfindung,
- Figuren 2a und 2b:: ein Gestängesystem gemäß einem ersten Ausführungsbeispiel der Erfindung für das in Figur 1 gezeigte Zelt, dargestellt in einer Seitenansicht (Figur 2a) sowie in einer Schnittansicht (Figur 2b) entsprechend einer Schnittlinie A-A,
- Figuren 3a bis 3c:: ein Kopplungselement des in Figuren 2a und 2b dargestellten Gestängesystems in einer Seitenansicht (Figur 3a), einer Schnittansicht (Figur 3b) entsprechend einer Linie B-B sowie einer Vorderansicht (Figur 3c),
- Figuren 4a und 4b:: einen Führungstrichter des in Figuren 2a und 2b gezeigten Gestängesystems in einer Rückansicht (Figur 4a) sowie eine Schnittansicht (Figur 4b) entsprechend einer Schnittlinie C-C,
- Figuren 5a bis 5c:: ein Klemmelement des in Figuren 2a und 2b gezeigten Gestängesystems in einer ersten Seitenansicht (Figur 5a), in einer Schnittansicht entsprechend einer Schnittlinie D-D sowie in einer zweiten Seitenansicht (Figur 5c),
- Figur 6:: ein Gestängesystem gemäß einem zweiten, nicht erfindungsgemäßen Ausführungsbeispiel in einer Schnittdarstellung entsprechend Figur 2b,
- Figuren 7a bis 7c:: Seitenansichten eines Gestängesystems gemäß einem dritten Ausführungsbeispiel der vorliegenden Erfindung, und
- Figuren 8a und 8b:: Funktionsansichten des Gestängesystems des dritten Ausführungsbeispiels der Erfindung in einem aufgebauten Zustand (Figur 8a) sowie einem zusammengelegten Zustand (Figur 8b).

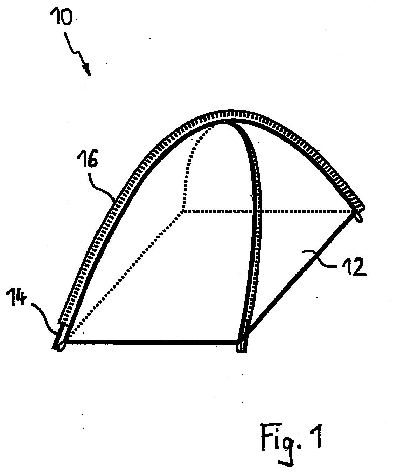

Das in Figur 1 gezeigte Zelt 10 des Ausführungsbeispiels der Erfindung umfasst eine Zeltwandung 12 sowie ein Gestängesystem 14, welches die Zeltwandung 12 in dem in Figur 1 gezeigten, aufgebauten Zustand des Zelts 10 abstützt. Die Verbindung zwischen Zeltwand 12 und Gestängesystem 14 kann durch einen Schlauchabschnitt 16 realisiert sein, welcher mit der Zeltwand 12 einteilig verbunden oder an dieser befestigt sein kann. Das Gestängesystem 14 kann dann in den Schlauchabschnitt 16 eingefädelt sein.

Im gezeigten ersten Ausführungsbeispiel umfasst das Zeltgestänge 14 eine aus einer Mehrzahl von Stangensegmenten 18-1 bis 18-n zusammengesetzte Stange 18 aus einem biegeelastischen Material, beispielsweise einem Glasfasermaterial oder aus einer Aluminiumlegierung. Die Stange 18 kann nach dem Zusammenfügen der Stangensegmente 18-1 bis 18-n in eine Bogenform gespannt werden, um einen kuppelförmigen Abschnitt des Zelts 10 zu bilden bzw. abzustützen. In anderen Varianten der Erfindung können die Gestängesysteme eine oder mehrere gerade Stangen umfassen.

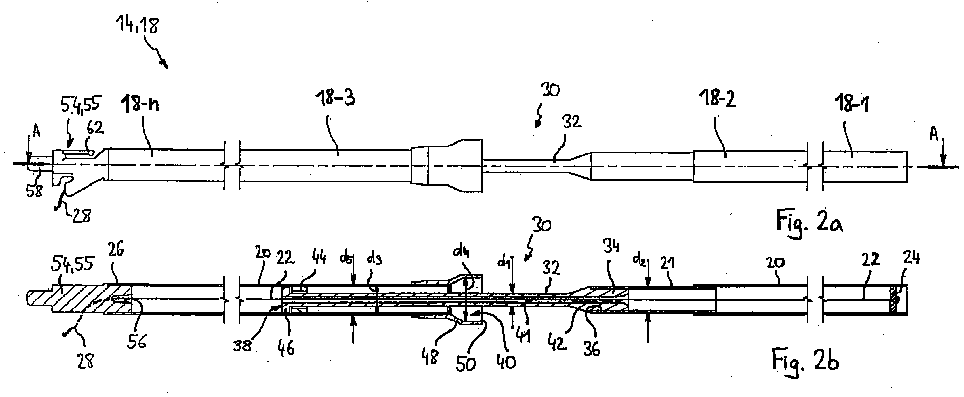

Figuren 2a und 2b zeigen eine Seitenansicht sowie eine Schnittansicht der Stange 18 des Gestängesystems 14. Aus illustrativen Gründen ist von einem vordersten oder ersten Stangensegment 18-1 nur ein vorderstes Ende dargestellt, von einem in der Reihe folgenden zweiten Stangensegment 18-2 ist nur ein hinterstes Ende dargestellt, von einem in der Reihe folgenden, dritten Stangensegment 18-3 ist nur ein vorderes Ende dargestellt, von einem in der Reihe letzten Stangensegment 18-n ist nur ein hinteres Ende dargestellt und die übrigen Stangensegmente 18-4 bis 18-n-1 sind in Figuren 2a und 2b nicht dargestellt.

Die Stangensegmente 18-1 bis 18-n weisen vorzugsweise gerade, zylinderförmige Rohre auf, welche zum Herstellen des aufgebauten Zustands des Gestängesystems 14 in axialer Richtung mit ihren aneinander zugewandten Endabschnitten konzentrisch aneinander anzufügen und insbesondere ineinander einzustecken sind. Im illustrierten Ausführungsbeispiel weisen die Stangensegmente 18-1 bis 18-n-1 jeweils einen rohrförmigen Hauptabschnitt 20 auf, der den größten Teil der Länge der Stangensegmente 18-1 bis 18-n-1 einnimmt, sowie einen jeweils am hinteren Ende des Hauptabschnitts 20 angeordneten, rohrförmigen Verbindungsabschnitt 21. Der Außendurchmesser des Verbindungsabschnitts 21 ist etwa um das doppelte der Wandstärke des Hauptabschnitts 20 kleiner als der Außendurchmesser des Hauptabschnitts 20, so dass der Verbindungsabschnitt 21 passend in ein vorderes Ende des Hauptabschnitts 20 des benachbarten Stangensegments 18-2 bis 18-n eingeschoben werden kann. Der Abschnitt am vorderen Ende des benachbarten Stangensegments 18-2 bis 18-n, an welchem der Verbindungsabschnitt 21 des angefügten Stangensegments 18-1 bis 18-n-1 in Eingriff tritt, wird als Halteabschnitt 23 bezeichnet. Am Halteabschnitt 23 liegen der Hauptabschnitt 20 und der Verbindungsabschnitt 21 der benachbarten Rohre als konzentrische Zylinder passend aneinander an, so dass auch bei Einwirkung hoher nicht-Axialkräfte ein Abknicken des Gestängesystems zwischen benachbarten Stangensegmenten verhindert wird.

Der Verbindungsabschnitt 21 und der Hauptabschnitt 20 eines Stangensegments 18-1 bis 18-n-1 sind im Ausführungsbeispiel als Rohre unterschiedlicher Durchmesser ausgeführt, welche ineinander gesteckt und miteinander fixiert wurden. Alternativ könnte der Verbindungsabschnitt 21 als Durchmesserreduzierter, integraler Abschnitt am hinteren Ende des Stangensegments 18-1 bis 18-n-1 ausgebildet sein.

Ein flexibles Sicherungsmittel, welches im Ausführungsbeispiel als Sicherungsseil 22 ausgebildet ist, durchläuft die Rohre der Stangensegmente 18-1 bis 18-n in axialer Richtung. Insbesondere ist ein einziges Sicherungsseil 22 durch alle Stangensegmente 18-1 bis 18-n hindurchgeführt. Das Sicherungsseil 22 ist vorzugsweise am ersten Stangensegment 18-1 fixiert, beispielsweise mittels eines am Innenumfang des Hauptabschnitts 20 des ersten Stangensegments 18-1 im Presssitz gehaltenen und gegebenenfalls verklebten Befestigungsrings 24, durchläuft dann der Reihe nach alle Stangensegmente 18-1 bis 18-n, wobei es grundsätzlich innerhalb aller Stangensegmente 18-2 bis 18-n frei verschiebbar ist, und tritt schließlich aus einem hinteren Endabschnitt 26 des letzten Stangensegments 18-n aus, um einen freiliegenden, von außen zugänglichen Betätigungsabschnitt 28 zu bilden, an welchem eine Zugbetätigung auf das Sicherungsseil 22 ausgeübt werden kann.

Das Sicherungsseil 22 ist aus einem zugunelastischen Material gebildet, beispielsweise aus einer Zeltleine, und kann auch großen Zugkräften widerstehen, ohne zu reißen oder signifikante elastische Dehnung zu zeigen.

In den Figuren 2a und 2b sind zwei benachbarte Stangensegmente 18-2, 18-3 gezeigt, welche durch ein im Folgenden zu beschreibendes Kopplungsmittel 30 miteinander gekoppelt sind. Das Kopplungsmittel 30 umfasst ein Kopplungselement 32, welches mit einem der beiden benachbarten Stangensegmente 18-2, 18-3 fest verbunden ist und an dem anderen der beiden Stangensegmente verschiebbar geführt ist. Im Ausführungsbeispiel ist das Kopplungselement 32 mit seinem vorderen Abschnitt 34 an einem Innenumfang 36 des Verbindungsabschnitts 21 des zweiten Stangensegments 18-2 im Presssitz gehalten und gegebenenfalls verklebt und ist mit einem Führungsabschnitt 38, der das hintere Ende des Kopplungselements 32 bildet, durch eine vordere axiale Öffnung 40 in den Hauptabschnitt 20 des dritten Stangensegments 18-3 eingeschoben und in dem Hauptabschnitt 20 axial verschiebbar gehalten.

Das Kopplungselement 32 kann ebenfalls eine grundsätzlich röhrenförmige Gestaltung mit einer axialen Durchgangsöffnung 41 aufweisen, durch welche das Sicherungsseil 22 hindurchgeführt ist. Das Kopplungselement 32 ist vorzugsweise aus einem flexiblen Material gebildet, so dass es bei Einwirkung einer nicht axialen Kraft abknickt oder verbogen wird. Damit ist es bei einer in Figuren 2a und 2b gezeigten, gelösten Stellung der Stangensegmente 18-2, 18-3 möglich, die benachbarten Stangenelemente 18-2, 18-3 zueinander insbesondere um 180° abzuknicken, um das Gestängesystem 14 zusammenzulegen.

Wie in Figuren 2a und 2b zu erkennen ist, kann das Kopplungselement 32 einen mittleren rohrförmigen Abschnitt aufweisen, dessen Außendurchmesser d1 deutlich kleiner ist als ein Außendurchmesser d2 des Verbindungsabschnitts 21 der Stangensegmente 18-1 bis 18-n-1 und kann an seinem vorderen Ende 34 einen abgeschrägten oder abgerundeten Übergangsabschnitt 42 aufweisen, an welchem der Außendurchmesser d1 kontinuierlich in den Außendurchmesser d2 übergeht. Der Übergangsabschnitt 42 bildet dann eine Einweisungsstruktur, welche beim Aneinanderfügen der Stangensegmente 18-2, 18-3 ein störungsfreies Hineingleiten des Verbindungsabschnitts 21 des zweiten Stangensegments 18-2 in den Hauptabschnitt 20 des dritten Stangensegments 18-3 ermöglicht. Dabei ist der Außendurchmesser d2 des Verbindungsabschnitts 21 an den Innendurchmesser d3 des Hauptabschnitts 20 angepasst, so dass der Verbindungsabschnitt 21 mit seiner zylindrischen Außenumfangsfläche passend an der zylindrischen Innenumfangsfläche des Hauptabschnitts 20 des benachbarten Stangensegments anliegt. Diese Passung zwischen Verbindungsabschnitt 21 und Hauptabschnitt 20 stellt die axiale Fixierung der beiden Stangensegmente 18-2, 18-3 im aufgebauten Zustand des Gestängesystems sicher.

Das Kopplungsmittel 30 des illustrierten Ausführungsbeispiels ist ferner dazu eingerichtet, eine axiale Trennungsbewegung der beiden benachbarten Stangensegmente 18-2, 18-3 auf einen vorbestimmten Maximalabstand der beiden Stangensegmente 18-2, 18-3 zu begrenzen. In den Figuren 2a und 2b sind die Stangenelemente 18-2, 18-3 in dem vorbestimmten Maximalabstand angeordnet, d.h. ein weiteres Herausziehen des Kopplungselements 32 aus dem Hauptabschnitt 20 ist nicht möglich. Die Begrenzung dieser Verschiebung in Trennungsrichtung wird im Ausführungsbeispiel realisiert durch einen ersten Anschlag 44, welcher fest mit dem Hauptabschnitt 20 des dritten Stangensegments 18-3 verbunden ist und welcher in Anlage mit einem zweiten Anschlag 46 gelangen kann, welcher fest mit dem Kopplungselement 32 verbunden ist. Der erste Anschlag 44 kann durch einen Ring gebildet sein, der im Presssitz (alternativ formschlüssig durch nach innen ragende Vorsprünge des Hauptabschnitts) passend am Innenumfang des Hauptabschnitts 20 befestigt und gegebenenfalls zusätzlich verklebt ist. Das Kopplungselement 32 ist dann durch den Ring hindurchgeführt und der zweite Anschlag 46 hintergreift als Verbreiterung oder Verdickung den Ring 44. Der zweite Anschlag 46 kann insbesondere ein am hinterstes Ende des Kopplungselement 32 vorgesehener Flansch sein, dessen radiale Außenabmessungen größer sind als der Innendurchmesser des Rings 44, jedoch kleiner sind als der Innenumfang d3 des Hauptabschnitts 20. Dementsprechend kann das Kopplungselement 32, welches fest mit dem ersten Stangensegment 18-2 verbunden ist, nur soweit aus dem Hauptabschnitt 20 des dritten Stangensegments 18-3 herausgezogen werden, bis der zweite Anschlag 46 des Kopplungselements 32 an dem ersten Anschlag 44 des Hauptabschnitts 20 zur Anlage kommt (Figur 2b).

Am vorderen, dem zweiten Stangensegment 18-2 zugewandten Ende des dritten Stangensegments 18-3 ist vorzugsweise ferner ein Führungstrichter 48 vorgesehen, dessen Innendurchmesser sich ausgehend vom Innendurchmesser d3 des Hauptabschnitts 20 in Richtung des zweiten Stangensegments 18-2 zunehmend vergrößert, bis er an seinem Trichterrand 50 einen Innendurchmesser d4 aufweist. Der größte Durchmesser d4 am Trichterrand 50 vorzugsweise ist ferner auch deutlich größer als ein Außendurchmesser d5 des Hauptabschnitts 20 der Stangensegmente 18-1 bis 18-n.

Vorzugsweise ist der Führungstrichter 48 ebenfalls aus einem flexiblen Material, z.B. aus dem gleichen Material wie das Kopplungselement 32, ausgebildet, so dass er bei normaler Nutzung die in den Figuren gezeigte Trichterform einnimmt, jedoch bei größeren Druckbelastungen, z.B. beim Zusammenlegen des Gestängesystems, in gewissem Maße nachgeben kann, um ein kleines Packmaß des Gestängesystems sicherzustellen, sowie die Handhabung des Gestängesystems komfortabler zu gestalten.

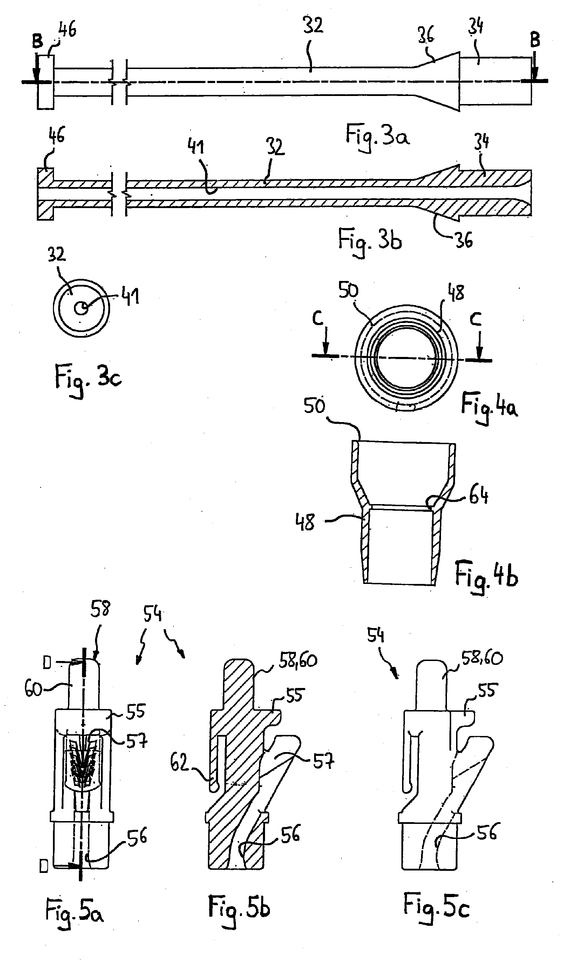

Am rückwärtigen Ende 26 des hintersten Stangensegments 18-n der Reihe von Stangensegmenten 18-1 bis 18-n ist vorzugsweise eine Fixiereinrichtung 54 vorgesehen, welche es erlaubt, das Sicherungsseil 22 in Bezug auf das letzte Stangensegment 18-n in einer gewünschten Position zu fixieren. Die Fixiereinrichtung 54 ist im Ausführungsbeispiel ein Klemmelement 55, welches an dem rückwärtigen Ende 26 des letzten Stangensegments 18-n befestigt, insbesondere am Innenumfang im Presssitz gehalten und gegebenenfalls verklebt ist. Wie ferner in Figuren 5a bis 5c gezeigt ist, weist das Klemmelement 55 eine axiale Öffnung 56 auf, welche die axiale Öffnung des Hauptabschnitts 20 des Stangensegments 18-n fortsetzt und im weiteren Verlauf in Rückwärtsrichtung von der zentralen Mittelachse des Stangensegments 18-n abweicht und in einen Klemmspalt 57 mündet. Das Sicherungsseil 22 wird somit von dem Hauptabschnitt 20 des Stangensegments 18-n in die axiale Öffnung 56 geführt, durchläuft anschließend den Spalt 57 und liegt im weiteren Verlauf frei. Der freiliegende, von außen zugängliche Abschnitt des Sicherungsseils bildet den Betätigungsabschnitt 28 des Sicherungsseils 22.

Das Klemmelement 55 kann ferner einen Seilaufnahmeabschnitt 58 aufweisen, z.B. eine Seilspule, um das freiliegende Ende des Sicherungsseils 22 aufzunehmen. Im Ausführungsbeispiel ist ein axialer Vorsprung 60, der am hintersten Ende des Klemmelements 55 in Rückwärtsrichtung vorsteht, dafür eingerichtet, das Sicherungsseil 22 im aufgewickelten Zustand zu halten. Das äußerste Ende des freiliegenden Abschnitts des Sicherungsseils 22 kann ferner schließlich durch ein elastisches Klemmmittel 62 festgeklemmt werden, um ein unerwünschtes, selbstständiges Abwickeln des Sicherungsseils 22 von dem Vorsprung 60 zu verhindern.

Die Funktionsweise des Zelts 10 sowie des Gestängesystems 14 gemäß den beschriebenen Ausführungsbeispielen der Erfindung wird nachfolgend unter Bezugnahme auf die Zeichnungen erläutert.

In einem zusammengelegten Zustand des Zelts sind benachbarte Stangensegmente 18-2, 18-3 voneinander soweit gelöst, dass die Kopplungselemente 32 freiliegen und das Gestängesystem jeweils an diesen Stellen um etwa 180° geknickt ist. Gemäß einem Vorteil der Erfindung befindet sich jedoch auch in diesem zusammengelegten Zustand das Gestängesystem 14 im Wesentlichen vollständig innerhalb des Schlauchabschnitts 16 des Zelts 10 und kann, wie im Folgenden beschrieben wird, aufgebaut werden, ohne vorher aus dem Schlauchabschnitt 16 entfernt zu werden.

Zum Aufbauen des Gestängesystems 14 werden die Zeltwand 12 und der Schlauchabschnitt 16 ausgebreitet, so dass die Winkel zwischen benachbarten Stangensegmenten 18-2, 18-3 verkleinert werden. Dazu reicht es beispielsweise, den Zeltboden auf der Erdoberfläche auszubreiten.

Anschließend wird das Sicherungsseil 22 an dem Betätigungsabschnitt 28 ergriffen und eine Zugbetätigung wird auf das Sicherungsseil 22 ausgeübt. Dazu kann der Nutzer insbesondere mit einer Hand das letzte Stangensegment 18-n halten und mit der anderen Hand den Betätigungsabschnitt 28 ziehen, wobei er vorzugsweise auf eine solche Führung bzw. Zugrichtung des Sicherungsseils 22 achtet, dass die Zugbetätigung nicht durch die Klemmwirkung des Spalts 57 behindert wird. Beispielsweise kann das Sicherungsseil 22 in einem Winkel zur axialen Richtung des Stangensegments 18-n gezogen werden, so dass das Sicherungsseil 22 im Bereich der Öffnung 56 des Klemmelements 55 umgelenkt wird.

Da das Sicherungsseil 22 am ersten, vordersten Stangensegment 18-1 fixiert ist und in Bezug auf alle anderen Stangensegmente 18-2 bis 18-n verschiebbar geführt ist, führt nun die weitere Zugbetätigung des Sicherungsseils 22 dazu, dass sich alle Stangensegmente 18-1 bis 18-n aufeinander zu bewegen. Dabei gleitet jeweils das Kopplungselement 32 weiter in den Hauptabschnitt 20 des nachfolgenden Stangensegments bis das vordere Ende 34 des Kopplungselements 32 in den Führungstrichter 48 und schließlich in den Hauptabschnitt 20 des benachbarten Stangensegments eindringt. Bei diesem Vorgang hält einerseits der weit ausgelegte Trichterrand 50 den umgebenden Zeltstoff des Schlauchabschnitts 16 zurück, so dass dieser nicht in die Öffnung 40 hineingezogen wird, und andererseits gleitet der Übergangsabschnitt 42 am Trichterrand 50 sowie anschließend am vordersten Rand des Hauptabschnitts 20 des benachbarten Stangensegments 18-3 ab, so dass der Verbindungsabschnitt 21 problemlos in den Hauptabschnitt 20 hineingleitet. Durch weiteres Ziehen am Betätigungsabschnitt 28 gleiten auf diese Weise die Verbindungsabschnitte 21 aller Stangensegmente 18-1 bis 18-n-1 in die benachbarten Hauptabschnitte 20 der benachbarten Stangensegmente 18-2 bis 18-n, bis die Hauptabschnitte 20 benachbarter Stangensegmente in Kontakt miteinander gelangen bzw. sehr dicht aneinander angeordnet sind. Ein direkter Kontakt zwischen benachbarten Hauptabschnitten 20 kann gewünschtenfalls dadurch vermieden werden, dass der Führungstrichter einen radial nach innen vorstehenden Ringabschnitt 64 aufweist, der im aneinandergefügten Zustand der Stangensegmente 18-1 bis 18-n zwischen den Stirnseiten der Hauptabschnitte 20 eingeklemmt wird.

Sind alle Stangensegmente 18-1 bis 18-n aneinandergefügt, so kann das Sicherungsseil 22 in dem Klemmspalt 57 gesichert werden und an dem Seilaufnahmeabschnitt 58 aufgewickelt werden. Aufgrund der unelastischen Gestaltung des Sicherungsseils 22 sind dann alle Stangensegmente 18-1 bis 18-n sicher miteinander verbunden und auch bei Einwirkung hoher Zugkräfte kommt es nicht zu einer ungewollten Trennung zwischen benachbarten Stangensegmenten. Auf diese Weise wird zudem eine Verbesserung der Stabilität des Gestängesystems 14 erreicht.

Anschließend können die für den Aufbau des Zelts an sich bekannten, weiteren notwendigen Maßnahmen ergriffen werden, z.B. das Biegen oder Spannen der Stange 18 oder das Verankern des Zelts 10 durch Heringe usw.

Zum Abbau des Zelts und Zusammenlegen des Gestängesystems ist ein Herausfädeln der Stangensegmente 18-1 bis 18-n aus dem Schlauchabschnitt 16 ebenfalls nicht erforderlich. Zum Lösen der Stangensegmente 18-1 bis 18-n wird zunächst der Betätigungsabschnitt 28 von dem Seilaufnahmeabschnitt 58 abgewickelt und aus dem Klemmeingriff mit dem Klemmspalt 57 gelöst. Das Sicherungsseil 22 ist dann wieder frei in den Stangensegmenten 18-2 bis 18-n verschiebbar. Anschließend wird eine Zugkraft in Rückwärtsrichtung auf das letzte Stangensegment 18-n ausgeübt, um das letzte Stangensegment 18-n von den anderen Stangensegmenten 18-1 bis 18-n-1 wegzuziehen. Dies ist möglich, da das letzte Stangensegment 18-n am Ende des Schlauchabschnitts 16 von außen zugänglich ist und unabhängig von dem Schlauchabschnitt 16 ergriffen und gezogen werden kann. Bei dieser Bewegung sollte gleichzeitig das erste Stangensegment 18-1 ortsfest gehalten werden. Dazu kann dieses zwar von Hand ergriffen und festgehalten werden, einfacher und schneller kann der Abbau des Gestängesystems jedoch erfolgen, wenn das erste Stangensegment 18-1 am Zelt 10 fixiert ist und an dieser Stelle das Zelt, beispielsweise durch einen Hering, am Erdboden fixiert ist. Alternativ könnte das erste Stangensegment 18-1 selbst am Erdboden fixiert sein.

Die Zugbetätigung des letzten Stangensegments 18-n bei freigegebenem Sicherungsseil 22 führt dazu, dass das Kopplungselement 32 aus dem Hauptabschnitt 20 herausgezogen wird, so dass das Kopplungselement 32 freigelegt wird. Diese Bewegung wird bei Erreichen des Maximalabstands zwischen den beiden benachbarten Stangensegmenten in der oben beschriebenen Weise gestoppt, beispielsweise durch Anschlag des ersten Anschlags 44 an dem zweiten Anschlag 46. Da eine weitere Bewegung in Trennungsrichtung nicht möglich ist, wird die auf das letzte Stangensegment 18-n ausgeübte Zugkraft nun auf das vorletzte Stangensegment 18-n-1 übertragen, so dass auch dieses Stangensegment sich von den davor liegenden Stangensegmenten 18-1 bis 18-n-2 entfernt. Somit werden gleichzeitig oder nach und nach nur durch fortwährende Zugbetätigung am letzten Stangensegment 18-n paarweise alle Stangensegmente 18-1 bis 18-n voneinander getrennt, bis sie jeweils in ihrem Maximalabstand angeordnet sind. Alle Kopplungselemente 32 sind dann freigelegt und erlauben ein Abknicken des Gestängesystems 14 an diesen Punkten. Das Gestängesystem kann dann, obwohl es noch immer in dem Schlauchabschnitt 16 eingefädelt ist, zusammengelegt werden, so dass auch das Zelt 10 insgesamt zusammengelegt und in transportable Form gepackt werden kann.

In der oben beschriebenen Weise kann das Zelt des Ausführungsbeispiels der Erfindung besonders schnell aufgebaut werden, da die gesamte Reihe von Stangensegmenten 18-1 bis 18-n durch eine einzige kräftige Zugbewegung des Sicherungsseils 22 schnell und sicher aneinandergefügt werden kann, was zudem innerhalb des Schlauchabschnitts 16 erfolgen kann. Damit kann insbesondere im Falle eines plötzlichen Wetterumschwungs bei einer alpinen Bergtour ein entscheidender Zeitvorteil erzielt werden. Auch für den Abbau des Gestängesystems ist eine einzige Zugbewegung am letzten Gestängesegment 18-n ausreichend, um alle Stangensegmente 18-1 bis 18-n paarweise voneinander zu lösen, so dass das Gestängesystem 14 anschließend sofort zusammengelegt werden kann.

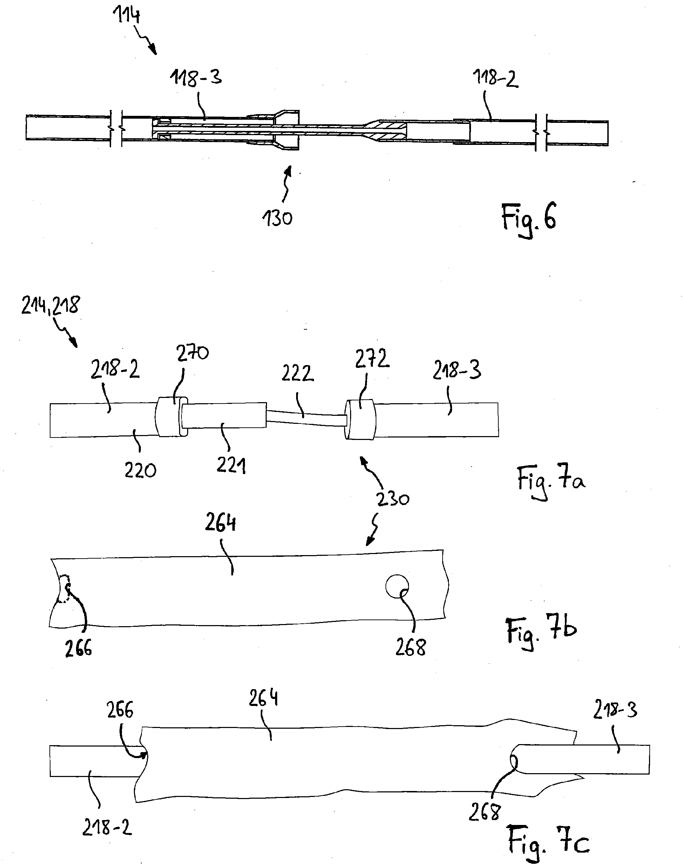

Unter Bezugnahme auf Figur 6 wird nachfolgend ein zweites, nicht erfindungsgemäßes Ausführungsbeispiel erläutert. Im Folgenden wird nur auf die Unterschiede zum ersten Ausführungsbeispiel näher eingegangen, wobei hinsichtlich aller hier nicht näher beschriebenen Merkmale und Funktionen ausdrücklich auf die Beschreibung des ersten Ausführungsbeispiels verwiesen wird.

Ein Gestängesystem 114 des zweiten Ausführungsbeispiels unterscheidet sich vom ersten Ausführungsbeispiel im Wesentlichen dadurch, dass auf ein die Stangensegmente 118 durchlaufendes Sicherungsmittel, wie ein Sicherungsseil 22 des ersten Ausführungsbeispiels, verzichtet wird. Benachbarte Stangensegmente 118-2 und 118-3 sind somit im gelösten oder zusammengelegten Zustand des Gestängesystems 114 ausschließlich durch ein Kopplungsmittel 130 miteinander verbunden. Das Kopplungsmittel 130 kann identisch mit dem Kopplungsmittel 30 des ersten Ausführungsbeispiels ausgestaltet sein.

Um das Gestängesystem 114 des zweiten Ausführungsbeispiels in den aufgebauten Zustand zu bringen, können die Stangensegmente 118 einfach weit genug in einen Schlauchabschnitt eines Zeltes oder dergleichen eingeschoben werden, wobei ein vom Nutzer entfernt liegendes, erstes Stangensegment am Ende des Schlauchabschnitts oder am Zelt gestoppt wird, so dass bei Ausübung ausreichender Druckkraft auf ein dem Nutzer zugewandtes, letztes Stangensegment alle Stangensegmente 118 aneinander geschoben werden und das Gestängesystem 114 in den aufgebauten Zustand gebracht wird. Die Schubbewegung des Nutzers auf das letzte Stangensegment kann durch eine Zugbewegung des Nutzers an einem dem letzten Stangensegment benachbarten Teil des Schlauchabschnitts oder Zeltes unterstützt werden. Die Bedienung des Gestängesystems 114 beim Abbau des Zeltes, d. h. Zusammenlegen des Gestängesystems 114, kann wie im ersten Ausführungsbeispiel erfolgen.

Unter Bezugnahme auf Figuren 7a bis 8b wird nachfolgend ein drittes Ausführungsbeispiel der Erfindung erläutert. Im Folgenden wird nur auf die Unterschiede zum ersten Ausführungsbeispiel näher eingegangen, wobei hinsichtlich aller hier nicht näher beschriebenen Merkmale und Funktionen ausdrücklich auf die Beschreibung des ersten Ausführungsbeispiels verwiesen wird.

Ein Gestängesystem 214 des dritten Ausführungsbeispiels ist aus einer Mehrzahl von Stangensegmenten 218 (hier dargestellt Stangensegmente 218-2 und 218-3) gebildet, welche durch ein Kopplungsmittel 230 miteinander gekoppelt sind. Gewünschtenfalls kann ferner ein Sicherungsseil 222 durch die Stangensegmente 218 gefädelt sein. Das Kopplungsmittel 230 umfasst gemäß dem dritten Ausführungsbeispiel eine Hülse 264, deren axiale Länge vorzugsweise kleiner ist als eine axiale Länge eines der Stangensegmente 218 und deren Innendurchmesser größer ist als der Außendurchmesser der Stangensegmente 218, so dass die Hülse 264 über die Stangensegmente 218, insbesondere über einen Verbindungsabschnitt zwischen zwei benachbarten Stangensegmenten 218-2, 218-3 gezogen werden kann. Die Hülse ist vorzugsweise aus einem flexiblen Material, z. B. einem Kunststoffmaterial, einem Elastomermaterial, einem Textilmaterial oder dergleichen gebildet. Besonders bevorzugt wird die Hülse aus einem Velcromaterial oder einem Vliesmaterial hergestellt, so dass sie flexibel, relativ leicht und doch sehr widerstandsfähig ist.

An gegenüberliegenden Enden weist die Hülse 264 eine erste Öffnung 266 bzw. eine zweite Öffnung 268 auf, wobei die Öffnungen 266, 268 an den Außendurchmesser der Stangensegmente 218 angepasst sind, so dass die Stangensegment 218 passend durch die Öffnungen 266, 268 geführt werden können. Der Innendurchmesser der Hülse 264 ist in einem Bereich zwischen den Öffnungen 266, 268 jedoch vorzugsweise größer als die Durchmesser der Öffnungen 266, 268, so dass sie Verdickungen 270, 272 aufnehmen können, welche an den einander zugewandten Endabschnitten benachbarter Stangensegmente 218-2, 218-3 fest vorgesehen sind. Die Verdickungen 270, 272 können durch an den Stangensegmenten 218 befestigte Ringe, beispielsweise Kunststoffringe, gebildet sein oder können materialeinheitlich als integrale Vorsprünge an den Enden der Stangensegmente 218 ausgebildet sein. An dem Stangensegment 218-2, an welchem ein Verbindungsabschnitt 221 nach dem Vorbild des Verbindungsabschnitts 21 des ersten Ausführungsbeispiels vorgesehen ist, der einen etwas kleineren Außendurchmesser aufweist als ein Hauptabschnitt 220 des Stangensegments 218-2, ist die Verdickung 270 vorzugsweise zwischen dem Hauptabschnitt 220 und dem Verbindungsabschnitt 221 angeordnet, so dass der Verbindungsabschnitt 221 in das benachbarte Stangensegment 218-3 eingeschoben werden kann.

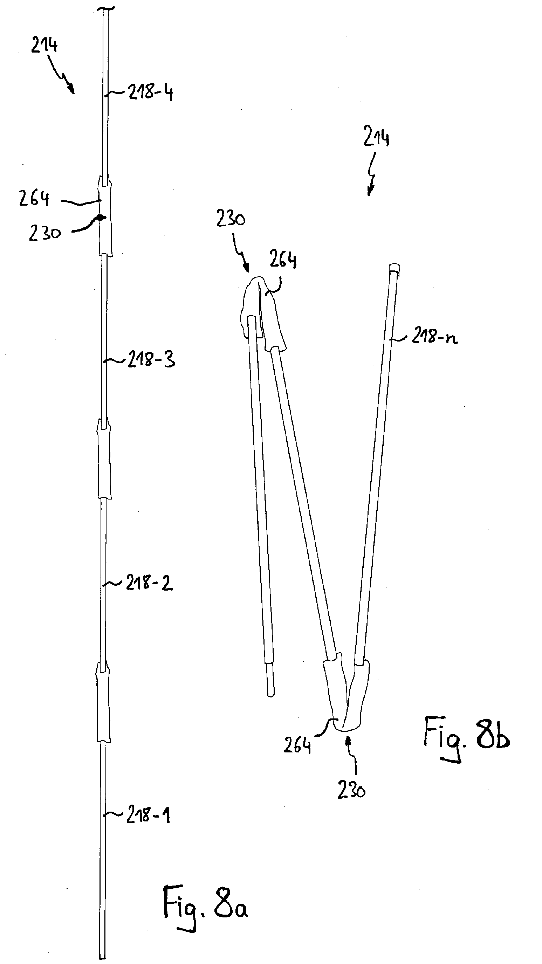

Im montierten Zustand des Gestängesystems 214 befinden sich die Verdickungen 270, 272 innerhalb der Hülse 264 zwischen den Öffnungen 266, 268. Im aufgebauten Zustand des Gestängesystems 214 (Figur 8a) sind die Stangensegmente 218-2, 218-3 aneinander gefügt, so dass eine durchgehende und stabile Stange hergestellt ist. Zum Verstellen des Gestängesystems 214 in den zusammengelegten Zustand (Figur 8b) kann ein letztes der Stangensegmente 218-n in axialer Richtung gezogen werden. Bei geeigneter Fixierung eines anderen Stangensegments 218, insbesondere des ersten Stangensegments 218-1, kann diese Zugbewegung dann dazu führen, dass sich benachbarte Stangensegmente (hier z. B. die Stangensegmente 218-2, 218-3) voneinander entfernen. Diese Trennungsbewegung wird dann gestoppt, wenn die Verdickungen 270, 272 im Inneren der Hülse 264 an den Öffnungen 266, 268 anstoßen, da die radialen Erstreckungen der Verdickungen 270, 272 größer sind als die Durchmesser der Öffnungen 266, 268, mit anderen Worten da die Verdickungen 270, 272 nicht durch die Öffnungen 266, 268 hindurch passen. Damit ist ein Maximalabstand der Stangensegmente 218-2, 218-3 in axialer Richtung durch den Abstand der Öffnungen 266, 268 der vollständig gestreckten Hülse 264 begrenzt. Im vorliegenden Beispiel kann als Maximalabstand dann der Abstand der Öffnungen 266, 268 abzüglich der axialen Erstreckungen der Verdickungen 270, 272 sowie abzüglich des Verbindungsabschnitts 221 angesehen werden.

Durch die Begrenzung der Trennungsbewegung auf den vorbestimmten Maximalabstand wird beim Anschlagen der Verdickungen 270, 272 an den Öffnungen 266, 268 die vom Benutzer ausgeübte Zugkraft auf das nachfolgende Stangensegmente 218 übertragen. Bei ausreichend weiter Zugbewegung wird dann die Zugkraft auf alle Stangensegmente übertragen und alle Stangensegment 218 können paarweise von ihren entsprechenden Nachbarn getrennt werden, bis das Gestängesystem 214 in den zum Zusammenlegen bereiten Zustand gebracht ist. Aufgrund der Flexibilität der Hülsen 264 kann das Gestängesystem 214 anschließend gemäß Figur 8b platzsparend und transportbereit zusammengelegt werden.

Anzumerken ist schließlich noch, dass die Gestängesysteme 14, 114, 214 aller Ausführungsbeispiele jeweils gleichermaßen verwendbar sind für ein Zelt mit außenliegendem Gestängesystem sowie auch für ein Zelt mit innenliegendem Gestängesystem, insbesondere in einen Schlauchabschnitt eingeführtem Gestängesystem.

## Patentansprüche

1. Gestängesystem (14; 114; 214) zur Abstützung einer zusammenlegbaren Outdoor-Konstruktion (10), insbesondere Zeltgestängesystem, umfassend
eine Mehrzahl von jeweils endseitig aneinanderfügbaren Stangensegmenten (18-1,..., 18-n; 118; 218),
ein durchgehendes, flexibles Sicherungsmittel (22; 222), welches durch die Stangensegmente hindurch geführt ist, so dass die Stangensegmente an dem Sicherungsmittel (22; 222) in einer Reihe aufgefädelt sind, und
mindestens ein flexibles Kopplungsmittel, durch welches zwei benachbarte Stangensegmente gekoppelt sind,
wobei das Kopplungsmittel (30; 130) mit einem ersten (18-2; 118-2) der beiden benachbarten Stangensegmente fest verbunden ist und mit einem zweiten (18-3; 118-3) der beiden Stangensegmente axial verschiebbar gekoppelt ist, und wobei das flexibles Kopplungsmittel (30), mit welchem die benachbarten Stangensegmente (18-2, 18-3) gekoppelt sind, zusätzlich zu dem Sicherungsmittel (22) bereitgestellt ist,
**dadurch gekennzeichnet, dass** das Kopplungsmittel (30; 130; 230) eine axiale Trennungsbewegung der beiden Stangensegmente auf einen vorbestimmten Maximalabstand der beiden Stangensegmente begrenzt.

2. Gestängesystem (14; 214) nach Anspruch 1, **dadurch gekennzeichnet, dass** das Sicherungsmittel (22; 222) im Wesentlichen zugunelastisch ist.

3. Gestängesystem (14; 214) nach Anspruch 1 oder Anspruch 2, **dadurch gekennzeichnet, dass** an dem Sicherungsmittel (22; 222) ein Betätigungsabschnitt (28) vorgesehen ist, an welchem eine Zugbetätigung auf das Sicherungsmittel ausgeübt werden kann.

4. Gestängesystem (14; 214) nach Anspruch 3, **dadurch gekennzeichnet, dass** das Sicherungsmittel (22) an einem vordersten Stangensegment (18-1) der Reihe von Stangensegmenten fixiert oder fixierbar ist und an oder nach einem letzten Stangensegment (18-n) der Reihe von Stangensegmenten den Betätigungsabschnitt (28) aufweist, an welchem eine Zugbetätigung auf das Sicherungsmittel ausgeübt werden kann, bis die Stangensegmente jeweils endseitig aneinandergefügt sind.

5. Gestängesystem (14) nach Anspruch 3 oder Anspruch 4, **gekennzeichnet durch** eine Fixiereinrichtung (54), mit welcher der Betätigungsabschnitt (28) in Bezug auf das Gestängesystem (14) fixierbar ist.

6. Gestängesystem (14; 114; 214) nach einem der vorhergehenden Ansprüche, **dadurch gekennzeichnet, dass** das Kopplungsmittel (30; 130; 230) röhrenförmig ausgebildet ist.

7. Gestängesystem (14; 214) nach Anspruch 1 und Anspruch 6, **dadurch gekennzeichnet, dass** das Kopplungsmittel (30; 230) von dem Sicherungsmittel (22; 222) axial durchsetzt wird.

8. Gestängesystem (14; 114) nach Anspruch 1, **dadurch gekennzeichnet, dass** ein vorderer Führungsabschnitt (38) des Kopplungsmittels (30; 130) auch dann noch in dem zweiten Stangensegment (18-3) eingeführt ist, wenn die beiden Stangensegmente in dem vorbestimmten Maximalabstand voneinander angeordnet sind.

9. Gestängesystem (14; 114) nach einem der vorhergehenden Ansprüche, **dadurch gekennzeichnet, dass** ein erstes (18-2) der Stangensegmente in axialer Richtung konzentrisch in eine axiale Öffnung (40) eines benachbarten zweiten der Stangensegmente (18-3) einsteckbar ist,
wobei die Öffnung (40) aufweist:
einen proximalen Halteabschnitt (23), dessen Innendurchmesser an den Außendurchmesser des ersten Stangensegments (18-2) angepasst ist, um das erste Stangensegment in einem aufgebauten Zustand des Gestängesystems (14; 114) passend aufzunehmen und zu halten, und
einen distalen Führungstrichter (48), dessen Innendurchmesser größer ist, als der Innendurchmesser des Halteabschnitts (23), so dass in dem aufgebauten Zustand des Gestängesystems (14; 114) zwischen dem Führungstrichter (48) und dem ersten Stangensegment (18-2) ein Ringspalt verbleibt.

10. Zusammenlegbare Outdoor-Konstruktion (10), insbesondere Zelt, umfassend ein Gestängesystem (14; 114; 214) nach einem der vorhergehenden Ansprüche zur Abstützung der Outdoor-Konstruktion in einem aufgebauten Zustand.

11. Outdoor-Konstruktion (10) nach Anspruch 10, **dadurch gekennzeichnet, dass** die Outdoor-Konstruktion mindestens einen Schlauchabschnitt (16) aufweist, in welchen die Stangensegmente (18-1, ..., 18n) im aufgebauten Zustand sowie im zusammengelegten Zustand der Outdoor-Konstruktion (10) eingeführt sind.

12. Outdoor-Konstruktion (10) nach Anspruch 10 oder Anspruch 11, **dadurch gekennzeichnet, dass** ein vorderstes Stangensegment (18-1) der Reihe von Stangensegmenten an der Outdoor-Konstruktion (10) fixiert oder fixierbar ist oder einen Verankerungsabschnitt zur Verankerung des Stangensegments am Erdboden oder an einer übergeordneten Konstruktion aufweist.

## Claims

1. Rod system (14; 114; 214) for supporting a collapsible outdoor construction (10), in particular a tent rod system, comprising a plurality of rod segments (18-1, ..., 18-n; 118; 218) that can each be joined together at the ends thereof, a continuous, flexible securing means (22; 222) which is guided though the rod segments such that the rod segments are threaded on the securing means (22; 222) in a row, and at least one flexible coupling means by which two adjacent rod segments are coupled, the coupling means (30; 130) being rigidly connected to a first (18-2; 118-2) of the two adjacent rod segments and being axially slidably coupled to a second (18-3; 118-3) of the two rod segments, and the flexible coupling means (30) by means of which the adjacent rod segments (18-2, 18-3) are coupled being provided in addition to the securing means (22), **characterised in that** the coupling means (30; 130; 230) restricts an axial separating movement of the two rod segments to a predetermined maximum distance of the two rod segments.

2. Rod system (14; 214) according to claim 1, **characterised in that** the securing means (22; 222) is substantially inelastic in tension.

3. Rod system (14; 214) according to either claim 1 or claim 2, **characterised in that** an actuating portion (28) is provided on the securing means (22; 222), at which portion a pull-type actuation can be exerted on the securing means.

4. Rod system (14; 214) according to claim 3, **characterised in that** the securing means (22) is or can be fastened to a foremost rod segment (18-1) of the row of rod segments and has, at or following a final rod segment (18-n) of the row of rod segments, the actuating portion (28), at which a pull-type actuation can be exerted on the securing means until the rod segments are each joined together at the ends thereof.

5. Rod system (14) according to either claim 3 or claim 4, **characterised by** a fastening means (54) by means of which the actuating portion (28) can be fastened to the rod system (14).

6. Rod system (14; 114; 214) according to any of the preceding claims, **characterised in that** the coupling means (30; 130; 230) is tubular.

7. Rod system (14; 214) according to claim 1 and claim 6, **characterised in that** the coupling means (30; 230) is axially penetrated by the securing means (22; 222).

8. Rod system (14; 114) according to claim 1, **characterised in that** a foremost guide portion (38) of the coupling means (30; 130) is still inserted in the second rod segment (18-3) even when the two rod segments are arranged at the predetermined maximum distance from one another.

9. Rod system (14; 114) according to any of the preceding claims, **characterised in that** a first (18-2) of the rod segments can be concentrically introduced, in the axial direction, into an axial opening (40) in an adjacent second rod segment (18-3), the opening (40) having: a proximal retaining portion (23) of which the inner diameter is adapted to the outer diameter of the first rod segment (18-2) in order to receive and retain the first rod segment such that it fits when the rod system (14; 114) is assembled, and a distal guide funnel (48) of which the inner diameter is greater than the inner diameter of the retaining portion (23) such that there is an annular gap between the guide funnel (48) and the fist rod segment (18-2) when the rod system (14; 114) is assembled.

10. Collapsible outdoor construction (10), in particular a tent, comprising a rod system (14; 114; 214) according to any of the preceding claims for supporting the outdoor construction when it is assembled.

11. Outdoor construction (10) according to claim 10, **characterised in that** the outdoor construction has at least one tube portion (16) in which the rod segments (18-1, ..., 18n) are inserted both when the outdoor construction (10) is assembled and when it is collapsed.

12. Outdoor construction (10) according to either claim 10 or claim 11, **characterised in that** a foremost rod segment (18-1) of the row of rod segments is or can be fastened to the outdoor construction (10) or has an anchoring portion for anchoring the rod segment to the ground or to a superordinate construction.

## Revendications

1. Système de tiges (14; 114; 214) pour supporter une construction d'extérieur repliable (10), en particulier système de tiges pour tente ; comprenant une pluralité de segments de barre (18-1, ..., 18-n ; 118 ; 218) qui peuvent être mis bout à bout respectivement par les extrémités,
un moyen de fixation continu souple (22 ; 222) qui est passé au travers des segments de barre de sorte que les segments de barre sont enfilés en un rang sur le moyen de fixation (22 ; 222), et
au moins un moyen de couplage souple par le biais duquel deux segments de barre voisins sont couplés,
dans lequel le moyen de couplage (30 ; 130) est relié fixement à un premier (18-2 ; 118-2) des deux segments de barre voisins et est couplé de façon à pouvoir être décalé axialement à un deuxième (18-3 ; 118-3) des deux segments de barre, et dans lequel le moyen de couplage souple (30) avec lequel les segments de barre voisins (18-2, 18-3) sont couplés, est mis à disposition en plus du moyen de fixation (22), **caractérisé en ce que**
le moyen de couplage (30 ; 130 ; 230) limite un mouvement de séparation axial des deux segments de barre sur un écart maximal prédéterminé des deux segments de barre.

2. Système de tiges (14 ; 214) selon la revendication 1, **caractérisé en ce que** le moyen de fixation (22 ; 222) est sensiblement non élastique en traction.

3. Système de tiges (14 ; 214) selon la revendication 1 ou la revendication 2, **caractérisé en ce que** sur le moyen de fixation (22 ; 222), une section d'actionnement (28) est prévue, au niveau de laquelle une action de traction peut être exercée sur le moyen de fixation.

4. Système de tiges (14 ; 214) selon la revendication 3, **caractérisé en ce que** le moyen de fixation (22) est fixé ou peut être fixé à un segment de barre avant (18-1) du rang de segments de barre et présente sur ou après un dernier segment de barres (18-n) du rang de segments de barre, la section d'actionnement (18-n) au niveau de laquelle une action de traction peut être exercée sur le moyen de fixation, jusqu'à ce que les segments de barre soient mis bout à bout respectivement par les extrémités.

5. Système de tiges (14) selon la revendication 3 ou la revendication 4, **caractérisé par** un système de fixation (54) avec lequel la section d'actionnement (28) peut être fixée par rapport au système de tiges (14).

6. Système de tiges (14; 114; 214) selon l'une quelconque des revendications précédentes, **caractérisé en ce que** le moyen de couplage (30 ; 130 ; 230) est conçu de forme tubulaire.

7. Système de tiges (14 ; 214) selon la revendication 1 et la revendication 6, **caractérisé en ce que** le moyen de couplage (30 ; 230) est traversé axialement par le moyen de fixation (22 ; 222).

8. Système de tiges (14 ; 114) selon la revendication 1, **caractérisé en ce qu'**une section de guidage avant (38) du moyen de couplage (30 ; 130) est ensuite introduite également dans le deuxième segment de barre (18-3), lorsque les deux segments de barre sont disposés dans l'écart maximal prédéterminé.

9. Système de tiges (14 ; 114) selon l'une quelconque des revendications précédentes, **caractérisé en ce qu'**un premier (18-2) des segments de barre peut être inséré en direction axiale de manière concentrique dans une ouverture axiale (40) d'un deuxième des segments de barre voisin (18-3),
dans lequel l'ouverture (40) présente :
une section de retenue proximale (23) dont un diamètre interne est ajusté au diamètre externe du premier segment de barre (18-2) pour recevoir et maintenir de façon ajustée le premier segment de barre dans un état monté du système de tiges (14 ; 114), et
un cône de guidage distal (48) dont un diamètre interne est plus grand que le diamètre interne de la section de retenue (23), de sorte qu'à l'état monté du système de tiges (14 ; 114), il reste un espace annulaire entre le cône de guidage (48) et le premier segment de barres (18-2).

10. Construction d'extérieur repliable (10), en particulier tente, comprenant un système de tiges (14; 114; 214) selon l'une quelconque des revendications précédentes pour le support de la construction d'extérieur à l'état monté.

11. Construction d'extérieur (10) selon la revendication 10, **caractérisée en ce que** la construction d'extérieur présente au moins une section tubulaire (16) dans laquelle les éléments de barre (18-1, ..., 18n) sont introduits à l'état monté ainsi qu'à l'état replié de la construction d'extérieur (10).

12. Construction d'extérieur (10) selon la revendication 10 ou la revendication 11, **caractérisée en ce qu'**un segment de barre avant (18-1) du rang de segments de barre est fixé ou peut être fixé à la construction d'extérieur (10) ou présente une section d'ancrage pour l'ancrage du segment de barre sur le sol ou à une construction superposée.
